**Europäisches Patentamt**

**European Patent Office**

**Office européen des brevets**

(11) Numéro de publication: **0 012 642**
**B1**

(12) **FASCICULE DE BREVET EUROPEEN**

(45) Date de publication du fascicule du brevet: **13.04.83**

(51) Int. Cl.³: **H 04 Q 11/04, H 04 Q 1/24**

(21) Numéro de dépôt: **79400888.8**

(22) Date de dépôt: **20.11.79**

(54) Dispositif de contrôle pour réseau de commutation temporelle.

(30) Priorité: **22.11.78 FR 7832905**

(43) Date de publication de la demande:
**25.06.80 Bulletin 80/13**

(45) Mention de la délivrance du brevet:
**13.04.83 Bulletin 83/15**

(84) Etats contractants désignés:
**BE DE GB NL**

(56) Documents cités:
**DE - A - 2 543 408**
**FR - A - 2 305 907**
**FR - A - 2 409 651**

**COMMUTATION & ELECTRONIQUE, no. 57,
avril 1977,
Paris (FR)
LAGER "Techniques et détection d'incidents
dans un centre de transit temporel", pages
29—34.**

(73) Titulaire: **THOMSON-CSF TELEPHONE
146, Boulevard de Valmy
F-92707 Colombes (FR)**

(72) Inventeur: **Bouvier d'Yvoire, Jean-Baptiste Le
Materiel
Telephonique THOMSON-CSF 46 Quai Alphonse
Le Gallo
F-92103 Boulogne Billancourt Cedex (FR)**
Inventeur: **Cauhape, Michel, Jean, Bernard Le
Materiel
Telephonique THOMSON-CSF 46 Quai Alphonse
Le Gallo
F-92103 Boulogne Billancourt Cedex (FR)**
Inventeur: **Lager, Jean-Paul Le Materiel
Telephonique THOMSON-CSF 46 Quai Alphonse
Le Gallo
F-92103 Boulogne Billancourt Cedex (FR)**

(74) Mandataire: **Thrierr, Françoise et al,
THOMSON-CSF SCPI 173, Bld Haussmann
F-75379 Paris Cedex 08 (FR)**

(56) References cited:
**INTERNATIONAL SWITCHING SYMPOSIUM,**
**octobre 1976,**
**Kyoto**
**ALTEHAGE et al. "PCM switching system EWSD**
**with TDM switching network for long-distance**
**and local traffic", pages 141—4—1**
**à 141—4—6.**

Dispositif de contrôle pour réseau de commutation temporelle

L'invention concerne un dispositif de contrôle du bon fonctionnement d'un réseau de commutation temporelle et plus particulièrement, un dispositif de contrôle de continuité des liaisons établies dans le réseau.

Un réseau de commutation temporelle permet l'échange de voies de communications multiplexées dans le temps entre des jonctions entrantes et des jonctions sortantes, un calculateur étant prévu pour fournir une information de correspondance déterminant la mise en relation d'une voie d'une jonction entrante avec une voie d'une jonction sortante.

On connaît, notamment du document FR—A—2 305 907, des dispositifs de ce type qui comportent une mémoire pour emmagasiner les informations de correspondance provenant du calculateur et deux circuits de prélèvement d'échantillons pour fournir à un comparateur les échantillons d'une voie avant et après passage dans le réseau.

Le principal inconvénient de ces dispositifs connus est que le temps de contrôle de l'ensemble des liaisons établies dans le réseau augmente avec la taille de celui-ci.

L'invention propose un dispositif dans lequel ce temps de contrôle est court et indépendant de la taille du réseau.

Selon une caractéristique de l'invention, le dispositif comporte plusieurs groupes de contrôle, chaque groupe étant relié à l'ensemble des jonctions entrantes par l'intermédiaire d'un circuit de synchronisation et multiplexage et à une partie de l'ensemble des jonctions sortantes par l'intermédiaire d'un circuit de multiplexage.

Selon une autre caractéristique de l'invention, les groupes de contrôle travaillent simultanément sous la commande d'un microcalculateur connecté au calculateur par l'intermédiaire de files d'attente.

Selon une autre caractéristique de l'invention, il est possible d'effectuer des tests soit en mode autonome, c'est-à-dire que l'ensemble des liaisons établies dans le réseau est testé sans aucune intervention du calculateur, soit à la demande du calculateur, comme par exemple le test d'un chemin dont les coordonnées sont précisées par le calculateur.

Selon une autre caractéristique du dispositif, un circuit d'autotest effectue régulièrement ou par ordre du calculateur le contrôle du dispositif.

Les objets et caractéristiques de la présente invention apparaîtront plus clairement à la lecture de la description suivante d'un exemple de realisation, ladite description étant faite en relation avec les figures ci-annexées dans lesquelles:

— la figure 1 représente l'ensemble du dispositif de contrôle et sa position par rapport au réseau de commutation;

— la figure 2 représente de façon détaillée un groupe de contrôle.

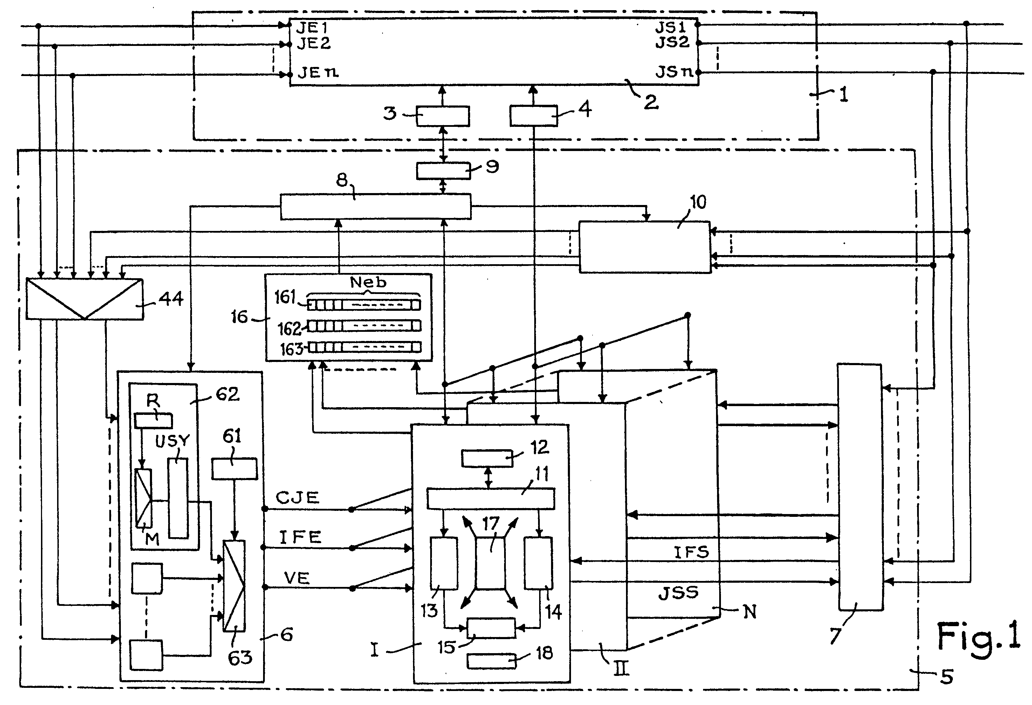

A la figure 1, le réseau de commutation 1 dont on veut contrôier le bon fonctionnement comporte un ensemble de connexion temporelle 2 dans lequel s'effectue l'échange des voies de communications; les voies se présentent sous forme série suivant les jonctions entrantes JE1, JE2,..., JEn et les jonctions sortantes JS1, JS2,..., JSn.

Pour commander l'ensemble 2, le réseau est muni d'un calculateur 3 qui fournit une information de correspondance entre une voie d'une jonction entrante et une voie d'une jonction sortante; comme les voies sont repérées tant aux jonctions entrantes qu'aux jonctions sortantes par des codes d'adresse, le calculateur fournit deux codes d'adresse pour indiquer les voies à mettre en relation. Dans ces codes d'adresse de voies, les éléments binaires de poids fort donnent l'adresse de la jonction et les éléments binaires de poids faible donnent l'adresse de la voie dans cette jonction. Les opérations à l'intérieur du réseau sont effectuées au rythme d'une horloge 4.

Classiquement, l'unité de commande du réseau comporte deux calculateurs et, dans la pratique, le dispositif de contrôle 5, selon l'invention, est dupliqué comme tout périphérique téléphonique, chaque calculateur commandant un dispositif de contrôle.

A la figure 1, on a représenté un seul calculateur 3 et un seul dispositif de contrôle 5.

Le dispositif de contrôle 5 comporte, un microcalculateur 8 qui est connecté au calculateur 3 par des files d'attente 9.

Conformément à l'invention, le dispositif de contrôle 5 comporte N groupes de contrôle I, II,..., N.

Chacun de ces groupes de contrôle est connecté à l'ensemble des jonctions entrantes par l'intermédiaire d'un circuit de synchronisation et de multiplexage 6.

Ce circuit 6 comporte un registre 61, écrit par le microcalculateur, qui contient l'adresse complète CJE de la jonction entrante pour laquelle une exploration se déroule.

Ce circuit 6 comporte, également, plusieurs groupes de synchronisation et multiplexage tel 62, qui comportent chacun un registre R, écrit par le microcalculateur, qui commande un multiplexeur M qui reçoit une partie des jonctions entrantes et fournit une seule jonction à une unité de synchronisation USY de type connu.

Les sorties de toutes le unités de synchronisation sont connectées aux entrées d'un multiplexeur 63, qui est commandé par les éléments binaires de poids fort de l'adresse CJE contenue dans le registre 61, ce qui permet de sélectionner tour à tour de façon cyclique les signaux de sortie de chacun des groupes de synchronisation. Les éléments binaires de poids faible de l'adresse CJE sont identiques aux éléments binaires du contenu du registre R du groupe de synchronisation dont la sortie est sélectionnée par le multiplexeur 63.

Ce circuit 6 permet d'affranchir le contrôle autonome du temps de synchronisation en utilisant indépendamment les différents groupes de synchronisation. En effet, pendant que les tests relatifs à une jonction entrante synchronisée se déroulent, les jonctions entrantes suivantes sont en cours de synchronisation par les autres unités de synchronisation. Cette méthode permet de gagner du temps car, les groupes de synchronisation travaillant en parallèle, on a toujours en sortie du circuit 6 une jonction synchronisée disponible sans aucune attente.

Le circuit 6 fournit simultanément à chacun des groupes de contrôle les informations IFE contenues dans une voie, désignées par le terme d'échantillon, les éléments binaires de cet échantillon étant fournis en parallèle, l'adresse VE de la voie d'où provient l'échantillon et l'adresse CJE de la jonction synchronisée d'où provient cette voie.

Chaque groupe de contrôle I à N est connecté à une partie de l'ensemble des jonctions sortantes par l'intermédiaire d'un circuit de multiplexage 7 qui fournit en série à chacun des groupes les informations IFS contenues dans une jonction et qui fournit donc simultanément à l'ensemble des groupes les informations contenues dans N jonctions. Ce circuit 7 reçoit de chaque groupe, l'adresse JSS de la jonction à sélectionner pour ce groupe à un instant donné.

Les groupes de contrôle communiquent avec le microcalculateur 8 par l'intermédiaire d'un circuit d'interface 16. Cette interface 16 est constituée par trois registres d'état 161, 162 et 163 à N éléments binaires et dans chaque registre l'élément binaire i est affecté au groupe de contrôle i. Ces registres d'état sont lus régulièrement par le microcalculateur.

Le dispositif 5 comporte enfin un circuit d'autotest 10 qui reçoit les jonctions sortantes JS1 à JSn et qui, après mise en forme, les réinjecte à l'entrée du circuit 6 par l'intermédiaire d'un ensemble de multiplexeurs 44.

L'ensemble des circuits 6, 10, 44 et I à N agit sous la commande du microcalculateur 8.

Chacun des groupes de contrôle tels que I comporte une mémoire de correspondance 11 dans laquelle sont stockées les informations de correspondance fournies par le calculateur et relatives aux jonctions sortantes reliées au groupe concerné. Cette mémoire 11 est explorée à l'aide d'un circuit logique d'exploration 12 et elle fournit à chacun des circuits de prélèvement 13 et 14 les adresses des voies, respectivement entrantes et sortantes, dans lesquelles on doit prélever les échantillons; ces circuits de prélèvement 13 et 14 reçoivent les échantillons, respectivement des circuits 6 et 7, et ils fournissent les échantillons sélectionnés à un circuit de comparaison 15.

Chaque groupe de contrôle comporte un séquenceur 17 qui est réalisé par une logique microprogrammée et qui a pour rôle de commander le déroulement des différentes phases exploration, prélèvement et comparaison lors du fonctionnement du dispositif en mode autonome.

Chaque groupe de contrôle comporte, enfin, un circuit de temporisation 18 déclenché par certaines actions du séquenceur et qui fournit un signal de fin de temporisation au registre d'état 161 du circuit 16.

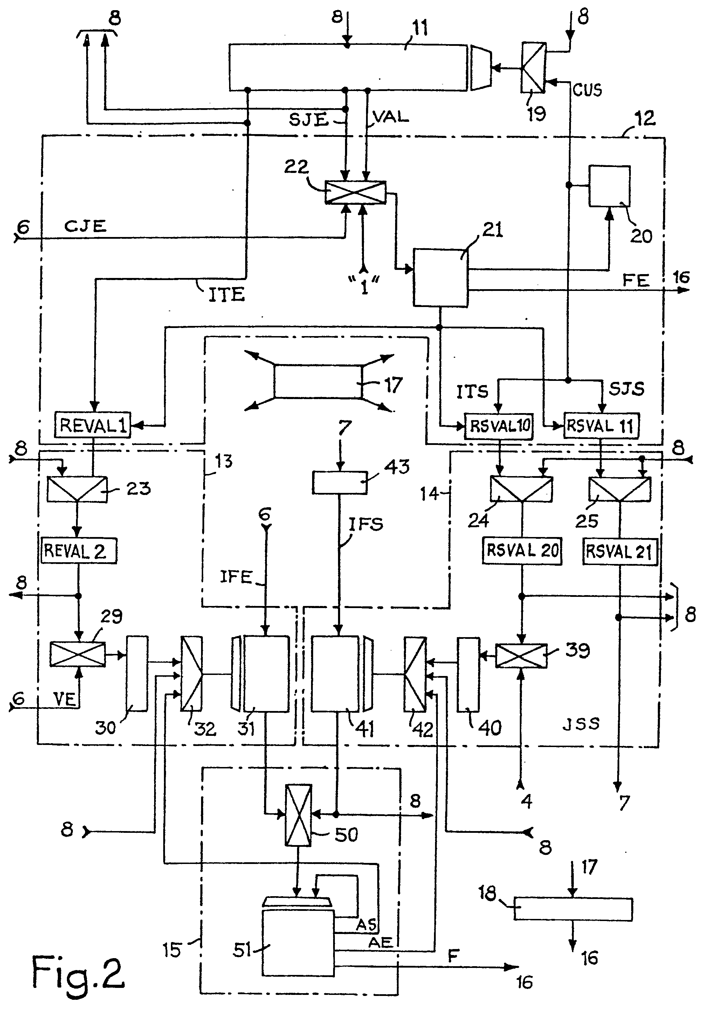

A la figure 2, on a représenté de façon détaillée un groupe de contrôle. Pour une opération d'écriture par le microcalculateur 8, la mémoire vive 11 reçoit en entrée les codes d'adresse des voies entrantes et elle est adressée en écriture, par l'intermédiaire d'un multiplexeur 19, par les codes d'adresse des voies sortantes de telle sorte que la mémoire 11 emmagasine le code d'adresse d'une voie entrante plus un élément binaire VAL de validation dans l'emplacement indiqué par le code d'adresse de la voie sortante à laquelle elle est reliée. Tout accès à la mémoire par le microcalculateur est prioritaire par rapport à toute autre opération.

Pour une opération de lecture par le circuit logique d'exploration 12, la mémoire est adressée en lecture, par l'intermédiaire du multiplexeur 19, par le signal CUS issu d'un compteur 20. Le signal CUS prend l'une après l'autre les valeurs des codes d'adresse des voies sortantes relatives du groupe concerné, sous la commande du circuit logique 21 qui dirige l'exploration de la mémoire 11. Lorsque l'exploration est terminée, c'est-à-dire lorsque toutes les lignes de la mémoire ont été lues, CUS est égal à zéro et le microcalculateur est prévenu à l'aide du signal FE, issu du circuit 21, et par l'intermédiaire du registre d'état 162 du circuit 16.

Les sorties de la mémoire 11 fournissent, d'une part, l'adresse d'une jonction entrante SJE et sur cette jonction l'adresse d'une voie ITE, d'autre part, l'élément binaire de validation VAL qui indique, s'il est au niveau logique "1", qu'une liaison est établie entre cette voie entrante et une voie sortante.

Un comparateur 22 permet à la fois de vérifier que la liaison est établie en comparant l'élément binaire VAL au niveau logique "1" et de comparer l'adresse SJE avec l'adresse CJE de la jonction entrante utilisée par la liaison que l'on veut tester.

Si le résultat de la comparaison effectuée par 22 est négatif, le circuit de commande 21 incrémente le compteur 20 d'une unité et l'on poursuit l'exploration de la mémoire jusqu'à ce que le résultat de la comparaison soit positif ou jusqu'à la fin de l'exploration de la mémoire.

Par contre, si le résultat de la comparaison effectuée par 22 est positif, le circuit 21 commande la mémorisation de l'adresse de la jonction sortante SJS dans un registre RSVAL 11, de l'adresse de la voie ITS dans un registre RSVAL 10 (SJS et ITS sont contenues dans CUS) et de l'adresse de la voie entrante ITE issue de la mémoire 11 dans un registre REVAL 1.

Lorsque le séquenceur commande le prélèvement, les adresses SJS, ITS et ITE sont stockées dans des registres intermédiaires respectivement RSVAL 20, RSVAL 21 et REVAL 2, ce qui autorise la poursuite de l'exploration de la mémoire 11, c'est-à-dire la recherche d'une autre liaison établie à tester, pendant que la procédure de contrôle (prélèvements plus comparaison) se déroule pour la liaison dont les coordonnées sont dans ces registres intermédiaires.

Lorsque toutes les explorations des mémoires de correspondance, contenues dans les groupes de contrôle sont terminées, c'est-à-dire lorsque le microcalculateur a reçu les signaux de fin d'exploration FE de tous les groupes de contrôle, le microcalculateur incrémente le compteur 61 afin de tester une autre liaison utilisant une autre jonction entrante.

Ainsi, les liaisons établies dans le réseau de commutation sont testées jonction entrante par jonction entrante lors du fonctionnement en mode autonome.

Pour effectuer les opérations de prélèvements, on compare à l'aide du comparateur 29 le contenu du registre REVAL 2 avec l'adresse de la voie entrante VE fournie par le circuit 6 et à l'aide du comparateur 39 le contenu du registre RSVAL 20 avec le signal provenant de l'horloge locale 4.

Chaque fois que le résultat de la première comparaison est positif, il entraîne le prélèvement d'un échantillon d'informations entrantes qui est écrit dans une mémoire vive 31. Ce prélèvement est suivi par l'incrémentation d'un compteur 30 à deux éléments binaires dont la sortie adresse en écriture par l'intermédiaire d'un multiplexeur 32 la mémoire vive 31 qui reçoit en entrée le signal d'informations entrantes IFE de la jonction entrante sélectionnée par 6.

Chaque fois que le résultat de la seconde comparaison est positif, il entraîne le prélèvement d'un échantillon d'informations sortantes qui est écrit dans une mémoire vive 41. Ce prélèvement est suivi par l'incrémentation d'une unité d'un compteur 40 à deux éléments binaires dont la sortie adresse en écriture par l'intermédiaire d'un multiplexeur 42 la mémoire vive 41 qui reçoit en entrée le signal d'informations sortantes IFS correspondant à la jonction sortante sélectionnée par 7, à l'aide de l'adresse de la jonction sortante sélectionnée JSS issue de RSVAL 21, et mis sous forme parallèle à l'aide du transformateur série-parallèle 43.

A l'aide de ces dispositifs de prélèvement on obtient donc dans les mémoires vives 31 et 41 la mémorisation de quatre échantillons successifs d'une même voie, respectivement entrante et sortante.

Ces échantillons sont comparés à l'aide du circuit de comparaison 15 qui comporte un comparateur 50 qui reçoit les signaux issus des mémoires 31 et 41 et dont la sortie adresse une mémoire programmable 51.

Dès que les échantillons ont été prélevés, la logique de comparaison 51 est activée. Cette logique de comparaison microprogrammée compare deux à deux les échantillons stockés dans les mémoires 31 et 41 jusqu'à la détection de deux couples d'échantillons égaux successifs; elle effectue toutes les combinaisons possibles en fonction des différents temps de traversée des échantillons dans le réseau. Ces combinaisons sont effectuées à l'aide des signaux d'adressage en lecture AS qui adressent la mémoire 31 par l'intermédiaire du multiplexeur 32 et AE qui adressent la mémoire 41 par l'intermédiaire du multiplexeur 42.

Si après un premier test deux couples d'échantillons égaux ne sont pas trouvés, on effectue un second test; ce second test effectué immédiatement après le premier consiste en un prélèvement de nouveaux échantillons sur les mêmes voies.

Si ce second test est également négatif, le chemin est déclaré "en faute" par la logique de comparaison qui le signale au microcalculateur par le signal F et par l'intermédiaire du registre d'état 163 de l'interface 16. Le groupe concerné attend que le microcalculateur ait lu les coordonnées du chemin "en faute" dans les registres RSVAL 21, RSVAL 20 et REVAL 2, avant de poursuivre le contrôle des chemins.

Un circuit de temporisation 18 est déclenché en mode autonome par chaque incrémentation du compteur 20 de la logique 12 d'exploration de la mémoire 11 de correspondance et en mode à la demande par tout ordre de prélèvement-comparaison provenant du microcalculateur. La fin de la temporisation est signalée au microcalculateur par l'intermédiaire du registre d'état 16.

Quand le microcalculateur lit le contenu du registre d'état 16, si la fin de temporisation est indiquée alors qu'il n'y a pas d'indication de fin d'exploration, ni d'indication de chemin "en faute", cela signifie que le groupe concerné est bloqué.

Grâce à ce circuit de temporisation 18, le microcalculateur est prévenu de tout bloquage dans le dispositif de contrôle.

Le circuit d'autotest 10 permet de tester régulièrement ou par ordre du calculateur les logiques de chaque groupe de contrôle. L'autotest consiste à créer un chemin fictif simulant un chemin de réseau et véhiculant des informations réelles.

Pour cela, les jonctions sortantes sont envoyées à l'entrée du circuit 6 par l'intermédiaire d'un ensemble de multiplexeurs 44 et après mise en forme par le circuit 10, pour simuler des informations provenant des jonctions entrantes.

Lors de la mise en forme, l'information est conservée identique à elle-même si l'on désire tester la capacité du circuit à détecter qu'un chemin est sans faute ou l'information est inversée si l'on désire tester la capacité du circuit à détecter qu'un chemin est en faute.

Quand le dispositif fonctionne à la demande du calculateur, s'il désire tester une liaison il fournit, par l'intermédiaire du microcalculateur 8, les coordonnées du chemin à tester aux registres RSVAL 21, RSVAL 20 et REVAL 2 via les multiplexeurs respectivement 23, 24 et 25.

S'il désire tester la présence du code de verrouillage de trame ou du code de voie libre sur une jonction sortante, le microcalculateur vient lire, dans la mémoire vive 41, les échantillons prélevés et la comparaison avec les codes appropriés est faite par le logiciel.

S'il désire tester la présence du code de verrouillage sur une jonction entrante, le microcalculateur essaye de synchroniser la jonction à tester.

Pour effectuer ces tests, le microcalculateur interrompt temporairement le contrôle autonome.

Le dispositif selon l'invention présente tous les avantages des dispositifs connus, c'est-à-dire que ce dispositif est utilisable pour tous les réseaux de commutation quelles que soient leur nature et leur technologie.

Il permet de tester toutes les liaisons en cours de fonctionnement et sur toute la longueur de la chaîne à l'intérieur du réseau de commutation et en plus il présente l'avantage d'avoir un temps de contrôle court (inférieur à six secondes pour une capacité pouvant aller jusqu'à 2048 jonctions MIC) et constant, quelle que soit la capacité du réseau, grâce au travail simultané de plusieurs groupes de contrôle.

Afin d'utiliser pleinement ce dernier avantage, le dispositif de contrôle est réalisé de façon modulaire, ce qui permet de suivre de façon simple l'accroissement ou la réduction du réseau.

**Revendications**

1. Dispositif de contrôle pour réseau de commutation temporelle (1) permettant l'échange de communications entre des jonctions entrantes (JE1, . . . , JEn) et des jonctions sortantes (JS1, . . . , JSn), un calculateur (3) étant prévu pour fournir une information de correspondance déterminant la mise en relation d'une voie d'une jonction entrante avec une voie d'une jonction sortante, dispositif caractérisé en ce qu'il comporte N groupes de contrôle (I, . . . , N), un microcalculateur (8) qui est connecté au calculateur (3) par l'intermédiaire de files d'attente (9) et sous la commande duquel les N groupes de contrôle travaillent simultanément, un circuit de synchronisation et multiplexage (6) qui relie chaque groupe de contrôle (I, . . . , N) à l'ensemble des jonctions entrantes (JE1, . . . , JEn) et un circuit de multiplexage (7) qui relie chaque groupe de contrôle (I, . . . , N) à une partie de l'ensemble des jonctions sortantes (JS1, . . . , JSn), affectée à ce groupe.

2. Dispositif de contrôle pour réseau de commutation temporelle selon la revendication 1, caractérisé en ce que le circuit de synchronisation et multiplexage (6) comporte plusieurs groupes de synchronisation (62), chacun d'eux comprenant un multiplexeur (M) dont les entrées reçoivent une partie des jonctions entrantes, dont l'entrée de commande est reliée à un registre (R), écrit par le microcalculateur (8) et dont la sortie est reliée à une unité de synchronisation (USY) qui fournit, en sortie, une jonction entrante synchronisée, les différents groupes de synchronisation étant totalement indépendants, et en ce que le circuit de synchronisation et multiplexage (6) comporte, également, un multiplexeur (63) dont les entrées sont reliées aux sorties des groupes de synchronisation (62) et dont la sortie fournit une fonction entrante synchronisée aux groupes de contrôle (I, . . . , N) et un registre (61) qui est relié à l'entrée de commande du multiplexeur (63) et qui est écrit par le microcalculateur (8) de telle sorte que la jonction entrante synchronisée, fournie aux groupes de contrôle, provienne tour à tour de façon cyclique de chacun des groupes de synchronisation (62), les groupes de synchronisation dont la sortie n'est pas sélectionnée travaillant à la synchronisation des jonctions suivantes de façon à avoir toujours une jonction synchronisée disponible, en sortie du circuit de synchronisation et multiplexage (6) sans aucune attente.

3. Dispositif de contrôle pour réseau de commutation temporelle selon la revendication 2 dans lequel un groupe de contrôle (I, . . . , N) comporte une mémoire de correspondance (11) et une logique (12) d'exploration de cette mémoire qui comprend un compteur d'adressage en lecture de la mémoire, caractérisé en ce que la mémoire de correspondance (11) d'un groupe comporte uniquement les informations de correspondance relatives aux jonctions sortantes affectées à ce groupe.

4. Dispositif de contrôle pour réseau de commutation temporelle selon la revendication 3 dans lequel un groupe de contrôle (I, . . . , N) comporte un dispositif (13) de prélèvement d'informations entrantes qui comprend un comparateur (29) qui compare l'adresse (ITE) de voie entrante provenant de la mémoire de correspondance (11) avec l'adresse (VE) de voie entrante issue du circuit de synchronisation et multiplexage (6), un compteur (30) à deux éléments binaires qui est relié à la sortie du comparateur (29) et une mémoire vive (31) de quatre mots adressée en écriture par le compteur et un dispositif (14) de prélèvement d'informations sortantes qui comprend un comparateur (39) qui compare l'adresse (ITS) de voie sortante issue du compteur (20) d'adressage en lecture de la mémoire de correspondance (11) avec le signal issu de l'horloge locale (4), un compteur (40) à deux éléments binaires qui est relié à la sortie du comparateur (39) et une mémoire vive (41) de quatre mots adressée en écriture par le compteur, caractérisé en ce que le dispositif (13) de prélèvement d'informations entrantes comporte un registre intermédiaire (REVAL 2) où est stockée, avant d'être fournie au comparateur concerné (29), l'adresse (ITE) de voie entrante qui provient de la mémoire de correspondance (11), et en ce que le dispositif (14) de prélèvement d'informations sortantes comporte deux registres intermédiaires (RSVAL 20, RSVAL 21) où sont stockées, dans le premier (RSVAL 20) l'adresse (ITS) de voie sortante, avant d'être fournie au comparateur concerné (39), et dans le second (RSVAL 21) l'adresse (SJS) de jonction sortante avant d'être fournie au circuit de multiplexage (7), ces deux adresses étant issues du compteur (20) d'adressage en lecture de la mémoire de correspondance (11), la présence de ces registres intermédiaires permettant la poursuite de l'exploration de la mémoire pendant le déroulement de la suite du traitement.

5. Dispositif de contrôle pour réseau de commutation temporelle selon la revendication 3, caractérisé en ce que chaque groupe de contrôle (I, ... , N) comporte un circuit de temporisation (18) déclenché par chaque incrémentation du compteur (20) d'adressage en lecture de la mémoire de correspondance et dont la fin de temporisation est inscrite dans un registre (16).

6. Dispositif de contrôle pour réseau de commutation temporelle selon 12 revendication 5, caractérisé en ce qu'il comporte, entre les N groupes de contrôle et le microcalculateur (8), un circuit d'interface (16) qui est constitué par trois registres d'état (161, 162, 163) à N éléments binaires qui indiquent pour chaque groupe, la fin d'exploration de la mémoire de correspondance (11), la fin de temporisation et la détection d'une liaison "en faute".

7. Dispositif de contrôle pour réseau de commutation temporelle selon la revendication 1, comportant un circuit d'autotest (10) qui réinjecte les informations sortantes, prises du côté "sortie" du dispositif de contrôle, comme informations entrantes fictives du côté "entrée" du dispositif de contrôle, caractérisé en ce qu'il comporte un circuit de mise en forme, dont les entrées sont reliées aux jonctions sortantes (JS1, ... , JSn) du réseau, dont les sorties sont reliées aux entrées du circuit de synchronisation et multiplexage (6) via un ensemble (44) de multiplexeurs dont les autres entrées sont reliées aux jonctions entrantes (JE1, ... , JEn), et, qui, sur ordre du microcalculateur (8), fournit des informations identiques à celles qu'il a reçues ou inversées.

Patentansprüche

1. Steueranordnung für ein Netz (1) mit zeitlicher Durchschaltung zum Austauschen von Nachrichten zwischen Eingangsverbindungen (JE1, ... , JEn) und Ausgangsverbindungen (JS1, ... , JSn), mit einem Rechner (3) zum Abgeben einer Zuordnungsinformation, die die Beziehung zwischen einem Kanal einer Eingangsverbindung mit einem Kanal einer Ausgangsverbindung festlegt, gekennzeichnet, durch N Steuergruppen (I, ... , N), einen Mikrorechner (8), der über Warteschlangen (9) an den Rechner (3) angeschlossen ist und unter dessen Steuerung die N Steuergruppen simultan arbeiten, eine Synchronisierungs- und Multiplexierschaltung (6), die jede Steuergruppe (I, ... , N) mit der Gesamtheit der Eingangsverbindungen (JE1, ... , JEn) verbindet, und eine Multiplexierschaltung (7), die jede Steuergruppe (I, ... , N) mit einem ihr zugeordneten Teil der Gesamtheit der Ausgangsverbindungen (JS1, ... , JSn) verbindet.

2. Steueranordnung für ein Netz mit zeitlicher Durchschaltung nach Anspruch 1, dadurch gekennzeichnet, daß die Synchronisierungs- und Multiplexierschaltung (6) mehrere Synchronisierungsgruppen (62) enthält, von denen jede einen Multiplexer (M) umfaßt, dessen Eingänge einen Teil der Eingangsverbindungen aufnehmen, dessen Steuereingang mit einem vom Mikrorechner (8) gespeisten Register (R) verbunden ist und dessen Ausgang mit einer Synchronisierungseinheit (USY) verbunden ist, die am Ausgang eine synchronisierte Eingangsverbindung liefert, wobei die verschiedenen Synchronisierungsgruppen vollkommen selbständig sind, und daß die Synchronisierungs- und Multiplexierschaltung (6) außerdem einen Multiplexer (63), dessen Eingänge mit den Ausgängen der Synchronisierungsgruppen (62) verbunden sind und dessen Ausgang an die Steuergruppen (I, ... , N) eine synchronisierte Eingangsverbindung liefert, sowie ein Register (61) enthält, das mit dem Steuereingang des Multiplexers (63) verbunden ist und vom Mikrorechner (8) so gespeist wird, daß die an die Steuergruppen abgegebene synchronisierte Eingangsverbindung abwechselnd in zyklischer Weise von jeder der Synchronisierungsgruppen (62) kommt, wobei die Synchronisierungsgruppen (62) kommt, wobei die Synchronisierungsgruppen, deren Ausgang nicht ausgewählt ist, mit der Synchronisierung der nächsten Verbindungen beschäftigt sind, so daß am Ausgang der Synchronisierungs- und Multiplexierschaltung (6) ohne Wartezeit stets eine synchronisierte Verbindung zur Verfügung steht.

3. Steueranordnung für ein Netz mit zeitlicher Durchschaltung nach Anspruch 2, in der eine Steuergruppe (I, ... , N) einen Zuordnungsspeicher (11) sowie eine Abtastlogik (12) für diesen Speicher enthält, die einen Speicherlese-Adressenzähler aufweist, dadurch gekennzeichnet, daß der Zuordnungsspeicher (11) einer Gruppe nur die Zuordnungsinformationen bezüglich der dieser Gruppe zugeordneten Ausgangsverbindungen enthält.

4. Steueranordnung für ein Netz mit zeitlicher Durchschaltung nach Anspruch 3, in der eine Steuergruppe (I,..., N) folgende Einheiten enthält: Eine Vorrichtung (13) zum Abnehmen ankommender Informationen, mit einem, Komparator (29), der die aus dem Zuordnungsspeicher (11) kommende Eingangskanaladresse (ITE) mit der aus der Synchronisierungs- und Multiplexierschaltung (6) kommenden Eingangskanaladresse (VE) vergleicht, mit einem 2-Bit-Zähler (30), der mit dem Ausgang des Komparators (29) verbunden ist, und mit einem Schreib/Lese-Speicher (31) für vier Wörter, der beim Schreiben von dem Zähler adressiert wird, und eine Vorrichtung (14) zur Abgabe abgehender Informationen, mit einem Komparator (39), der die Ausgangskanaladresse (ITS) aus dem Adressierungszähler (20) beim Lesen des Zuordnungsspeichers (11) mit dem vom Ortstaktgeber (4) abgegebenen Signal vergleicht, mit einem 2-Bit-Zähler (40), der mit dem Ausgang des Komparators (39) verbunden ist, und mit einem Schreib/Lese-Speicher (41) für vier Wörter, der beim Schrieben von dem Zähler adressiert wird, dadurch gekennzeichnet, daß die Vorrichtung (13) zum Abnehmen ankommender Informationen ein Zwischenregister (REVAL 2) enthält, in dem vor der Abgabe an den betroffenen Komparator (29) die Eingangskanaladresse (ITE) gespeichert wird, die vom Zuordnungsspeicher (11) kommt, und daß die Vorrichtung (14) zur Abnahme abgehender Informationen zwei Zwischenregister (RSVAL 20, RSVAL 21) enthält, bei denen im ersten (RSVAL 20) die Ausgangskanaladresse (ITS) vor ihrer Abgabe an den betroffenen Komparator (39) gespeichert wird, während im zweiten (RSVAL 21) die Adresse (SJS) der abgehenden Verbindung vor ihrer Abgabe an die Multiplexierschaltung (7) gespeichert wird, wobei diese zwei Adressen von dem zur Adressierung beim Lesen des Zuordnungsspeichers (11) verwendeten Zähler (20) kommen, und wobei das Vorhandensein dieser Zwischenregister ermöglicht, die Abtastung des Speichers während des Verarbeitungsablaufs zu verfolgen.

5. Steuervorrichtung für ein Netz mit zeitlicher Durchschaltung nach Anspruch 3, dadurch gekennzeichnet, daß jede Steuergruppe (I,..., N) eine Zeitgeberschaltung (18) enthält, die bei jeder Fortschaltung des für die Adressierung beim Lesen des Zuordnungsspeichers verwendeten Zählers (20) ausgelöst wird und deren Zeitablauf in einem Register (16) eingeschrieben wird.

6. Vorrichtung zum Steuern eines Netzes mit zeitlicher Durchschaltung nach Anspruch 5, gekennzeichnet durch eine zwischen die N Steuergruppen und den Mikrorechner (8) eingefügte Schnittstellenschaltung (16), die von drei N-Bit-Zustandsregistern (161, 162, 163) gebildet ist, die für jede Gruppe das Ende der Abtastung des Zuordnungsspeichers (11), das Ende des Zeitablaufes und die Feststellung einer fehlerhaften Verbindung anzeigen.

7. Vorrichtung zum Steuern eines Netzes mit zeitlicher Durchschaltung nach Anspruch 1, mit einer Eigentestschaltung (10), die die von der Ausgangsseite der Steuervorrichtung abgenommenen abgehenden Informationen wieder als fiktive ankommende Informationen in die Eingangsseite der Steuervorrichtung eingibt, gekennzeichnet durch eine Formatierungsschaltung, deren Eingänge mit den abgehenden Verbindungen (JS1,..., JSn) des Netzes verbunden sind, deren Ausgänge mit den Eingängen der Synchronisierungs- und Multiplexierungsschaltung (6) über eine Multiplexergruppe (44) verbunden sind, deren andere Eingänge an die ankommenden Verbindungen (JE1,..., JEn) angeschlossen sind, und die auf Befehl durch den Mikrorechner (8) Informationen liefert, die zu den von ihr empfangenen Informationen identisch oder invers sind.

**Claims**

1. Control device for a time switching network (1) permitting the exchange of communications between input junctions (JE1,..., JEn) and output junctions (JS1,..., JSn), a computer (3) being provided to supply a correspondence information determining the relation establishment of one channel of an input junction with one channel of an output junction, the device being characterised in that it comprises N control groups (I,..., N), a micro-computer (8) connected to the computer (3) through waiting lists (9) and under the control of which the N control groups operate simultaneously, a synchronisation and multiplexing circuit (6) connecting each control group (I,..., N) to all of the input junctions (JE1,..., JEn) and a multiplexing circuit (7) connecting each control group (I,..., N) to a portion of the output junctions (JS1,..., JSn) associated with this group.

2. Control device for a time switching network in accordance with claim 1, characterised in that the synchronisation and multiplexing circuit (6) comprises a plurality of synchronisation groups (62) each of which comprises a multiplexer (M) the inputs of which receive part of the input junctions, the control input of which is connected to a register (R) fed by the microcomputer (8), and the output of which is connected to a synchronisation unit (USY) providing at its output a synchronised input junction, the different synchronisation groups being totally independent, and in that the synchronisation and multiplexing circuit (6) further comprises a multiplexer (63), the inputs of which are connected to the outputs of the synchronisation groups (62) and the output of which supplies a synchronised input junction to the control group (I, ..., N), and a register (61) connected to the control input of the multiplexer (63) and fed by the micro-computer (8) in such a way that the synchronised input junction supplied to the control groups originates cyclically and in turns from each of the synchronisation groups (62), the synchronisation groups of which the output is not selected operating to provide for the synchronisation of the following junctions in a manner to have an available synchronised junction at all times, at the output of the synchronisation and multiplexing circuit (6) without any waiting.

3. Control device for a time switching network in accordance with claim 2, in which a control group (I, ..., N) comprises a correspondence memory (11) and logic exploration means (12) for exploration of this memory, comprising a memory reading addressing counter, characterised in that the correspondence memory (11) of one group contains only the correspondence information related to the output junctions associated with this group.

4. Control device for a time switching network in accordance with claim 3, in which a control group (I, ..., N) comprises a device (13) for picking up input information, said device comprising a comparator (29) comparing the address (ITE) of the input channel originating from the correspondence memory (11) with the address (VE) of the input channel originating from the synchronisation and multiplexing circuit (6), a 2-bit counter (30) connected to the output of the comparator (29) and a 4 byte read/write memory (31) addressed by the counter for writing operations, and a device (14) for picking up output information, said device comprising a comparator (39) comparing the address (ITS) of the output channel originating from the counter (20) for addressing the correspondence memory (11) during reading operations with the signal originating from the local clock (4), a 2-bit counter (40) connected to the output of the comparator (39) and a 4 byte read/write memory (41) addressed by the counter for writing operations, characterised in that the device (13) for picking up input information comprises an intermediate register (REVAL 2) where the address (ITE) of the input channel originating from the correspondence memory (11) is stored before being supplied to the comparator concerned (29), and in that the device (14) for picking up output information comprises two intermediate registers (RSVAL 20, RSVAL 21) in the first of which (RSVAL 20) the address (ITS) of the output channel is stored before it is supplied to the comparator concerned (39) and in the second of which (RSVAL 21) the address (SJS) of the output junction is stored before it is supplied to the multiplexing circuit (7), these two addresses being supplied by a counter (20) for addressing the correspondence memory (11) during reading operations, the presence of these intermediate registers permitting to pursue the exploration of the memory during the development of the processing sequence.

5. Control device for a time switching network in accordance with claim 3, characterised in that each control group (I, ..., N) comprises a timing circuit (18) triggered by each incrementation of the counter (20) for addressing the correspondence memory during reading operations, and the timing end of which is marked in a register (16).

6. Control device for a time switching network in accordance with claim 5, characterised in that it comprises an interface circuit (16) between the N control groups and the microcomputer (8), the interface circuit being formed by three N bit status registers (161, 162, 163) indicating for each group the end of the exploration of the correspondence memory (11), the timing end and the detection of a "faulty" connection.

7. Control device for a time switching network in accordance with claim 1 comprising a self test circuit (10) reinjecting the output information derived from the "output" of the control device as fictitious input information on the "input" side of the control device, characterised in that it comprises a shaping circuit the inputs of which are connected to the output junctions (JS1, ..., JSn) of the network, the outputs of which are connected to the inputs of the synchronisation and multiplexing circuit (6) through a group of multiplexers (44) the other inputs of which are connected to the input junctions (JE1, ..., JEn), and which supplies information identical to or inverted with respect to those received upon being instructed by the micro-computer (8).

Fig.1

0012642

Fig.2